# EUROPEAN PATENT APPLICATION

(11) **EP 3 118 050 A2**
(43) Date of publication of application: **18.01.2017**
(21) Application number: 16179215.5
(22) Date of filing: 13.07.2016
(51) Int. Cl.: B60L 3/12

(54) **IMPROVEMENTS IN OR RELATING TO ELECTRIC VEHICLES**

(30) Priority: 15.07.2015 GB 201512364
(71) Applicant: Ford Global Technologies, LLC, Dearborn, MI 48126 (US)
(72) Inventor: HUEBNER, Annette Lynn, White Lake, Michigan 48386 (US)
(74) Representative: Stratagem IPM Limited

(57) **Abstract**

A keypad is provided on an exterior of an electrical vehicle. The keypad is configured to receive an input to enable access to the vehicle and to provide an indication of the state of charge of the battery of the vehicle.

## Description

This invention relates to improvements in or relating to electric vehicles and, in particular, to entry key pads for these vehicles.

Keyless entry to vehicles, in particular, motor vehicles is known. There are various different types of keyless entry including the use of a keypad on the exterior of the vehicle.

US8994495 discloses a keypad that is integral with a window of a vehicle. The keypad indicia are formed using a ultra-violet (UV) fluorescent dye that is nearly invisible to the human eye until exposed to UV light. A UV light emitting device is configured to illuminate the indicia in use making them visible to the user.

In an electric vehicle, the state of charge of the battery is clearly critical to the operation of the vehicle. Typically information about the state of charge has been displayed either on the dashboard in a similar manner to the familiar fuel gauge in a diesel or gasoline fuelled vehicle or in the vicinity of the charging socket. For examples, JP3252035 shows a series of indicator lamps mounted adjacent the socket in the power supply section. These systems provide information to the user when charging and driving the vehicle respectively.

It is against this background that the present invention has arisen.

According to the present invention there is provided a keypad is provided on an exterior of an electrical vehicle, the keypad is configured to receive an input to enable access to the vehicle and to provide an indication of the state of charge of the battery of the vehicle.

The provision of information relating to the state of charge of the vehicle at the point of entry to the vehicle is advantageous when it is conveniently combined with the entry keypad. This allows the user to confirm the state of charge of the battery before entering the vehicle and embarking on a journey. The provision of the charge indicator with the vehicle entry keypad also saves time for the user who might otherwise have to access the vehicle charge point in order to verify the state of charge of the battery prior to commencing a journey.

The location of the keypad is chosen to optimise the experience of the user in terms of convenience and ease of use. In particular the keypad may be provided on a window of the vehicle. This is has additional advantage that the display may also be visible from inside the vehicle. Alternatively, the keypad may be provided on a trim panel of the vehicle, in particular, the B-pillar.

The keypad is configured to provide an indication of the state of charge of the battery of the vehicle. The indication of the state of charge of the battery of the vehicle may be provided using the access code entry region. This is the most space efficient configuration in that the access code entry region is duel purpose. In one example, each pair of indicia is provided within an active, rectangular region and the rectangular regions may be arranged substantially vertically above one another. This stack of rectangular regions is similar to a familiar battery charge indicator as provided on many electronic devices and it is therefore intuitive to the user to see the number of rectangular regions illuminated to correspond to the state of charge of the battery. For example, if all of the rectangular regions are illuminated, the battery is substantially fully charged. Each rectangular region may be configured to represent a predetermined percentage of battery charge so that the number of regions illuminated corresponds to the level of charge of the battery. For example, if there are five rectangular regions and each is configured to represent 20% charge and therefore if only one is illuminated, the charge level is 20% or less, if two are illuminated, the charge level is between 21-40%, if three are illuminated, the charge level is between 41-60% and if four are illuminated the charge level is between 61-80%.

In an alternative example, the indication of the state of charge of the battery of the vehicle may provided adjacent the access code entry region. This configuration enables the state of charge of the battery to be provided simultaneously with the keypad indicia for entry to the vehicle.

The keypad may be further configured to provide an indication that the battery is being charged. This indication may be a static image or it may have some level of animation. For example, the rectangles may be configured to illuminate sequentially so that first the lowest one is illuminated, then the lower two, then three, then four, then finally all five are illuminated. Following this the illumination may be briefly removed before starting the sequence again. Each configuration may be held for 0.1s, 0.5s or 1s, thus providing an animation indicative of the battery being charged.

The keypad may have an access code entry region that comprises a light reactive substance that is configured to transition between being substantially invisible to the human eye and being visible when light of a specified waveband is incident thereon. The keypad may further comprise a light emitting device configured for outputting light of the specified waveband. The specified waveband may be UV light.

The access code entry region may be touch-sensitive to receive the input to enable access to the vehicle.

The access code entry region may comprise a plurality of indicia which may be the numbers 0-9; a selection of letters or shapes or any other combination of indicia which will be easily memorable for the user. The indicia may be arranged in pairs. The pairs of indicia may be arranged substantially vertically above one another. By "substantially vertically" it should be understood that the pairs of indicia appear one above the other in a configuration that extends further in the vertical extent than the horizontal direction. For example, if the indicia are provided on a section of B-pillar trim that extends at 10°, 20° or even 30° to the vertical, then this is still "substantially vertically" aligned.

The keypad may further comprise a data processor and a data storage device and wherein the keypad may be further configured to compare an input with a predefined code stored in the data storage device and, where the input and predefined code match, to enable access to the vehicle.

The invention will now be further and more particularly described, by way of example only, and with reference to the accompanying drawings, in which:
Figures 1A-1F show an example of the present invention; and
Figure 2 shows a further example of the present invention.

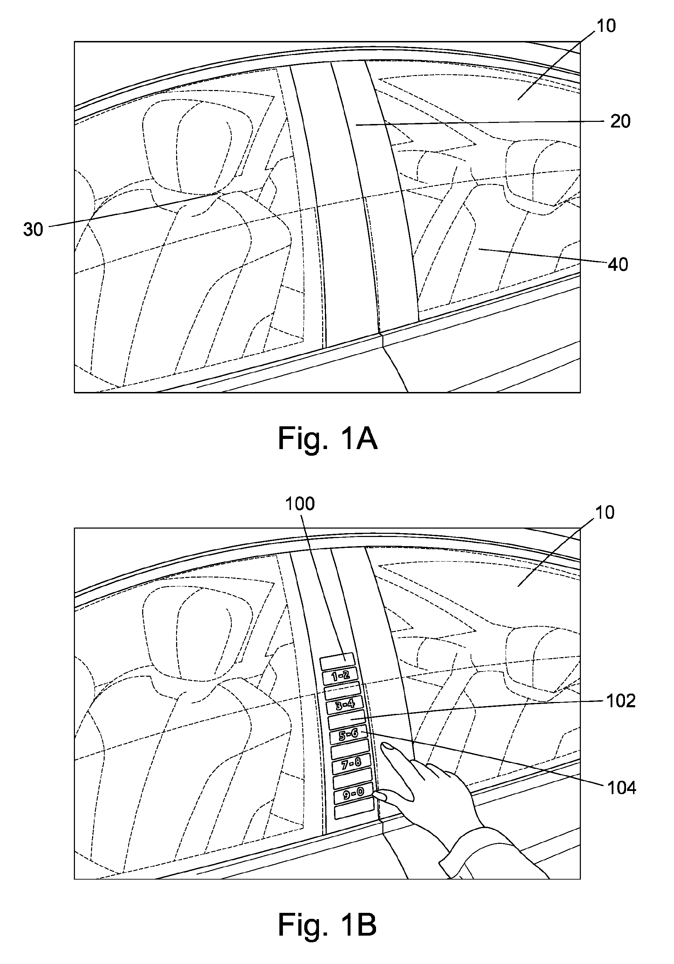

Figure 1A shows, schematically, part of the side of a vehicle 10 including a B-pillar 20 between a front window 30 and a rear window 40. This is how the vehicle appears when the keypad of the present invention is not active. The keypad is not visible.
Figure 1B shows the keypad 100 of the present invention when it is configured to enable access to the vehicle 10. The keypad 100 includes a number of active regions 102. Some of the active regions have indicia 104 and some are blank. Alternate active regions 102 are provided with indicia 104 in the form of pairs of numbers, 1-2, 3-4, 5-6, 7-8, 9-0. When the keypad 100 is being used for vehicle entry a light source (not shown) illuminates the indicia 104 so that the user can interact with the keypad to gain access to the vehicle.

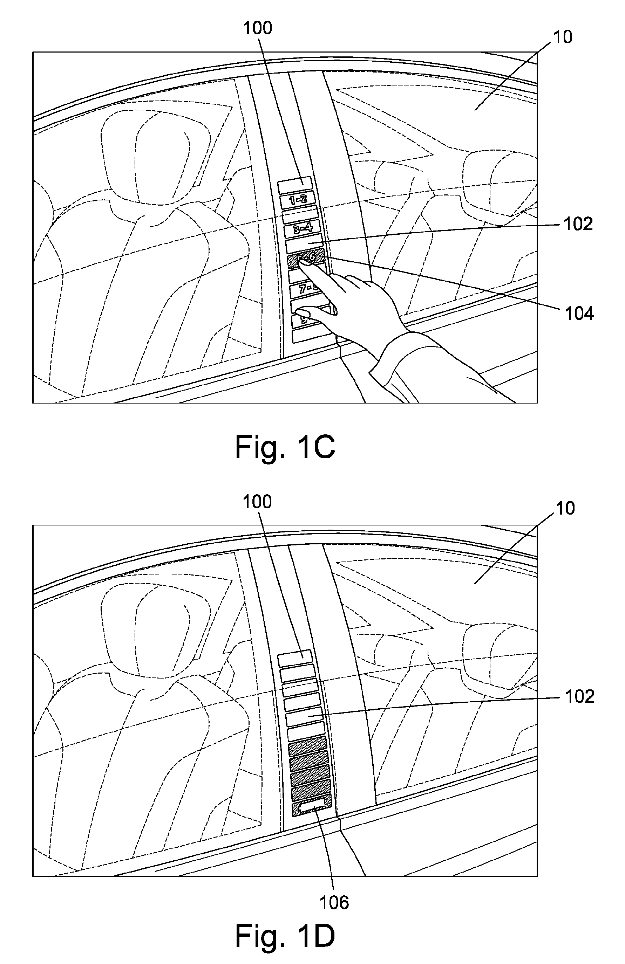

Figure 1C shows the keypad 100 in use for vehicle entry. The input from the user is captured by the keypad using a touch sensitive layer in the keypad (not shown) in order to interpret the user's input. When the user touches one of the indicia 104, substantially the entirety of the relevant active region 102 is illuminated in order to provide feedback to the user that the touch has been registered by the keypad 100. Whilst the active region 102 as a whole is illuminated, the illumination of the indicia 104 is changed so that there is still a visible contrast between the indicia and the remaining part of the active region 102.
Figure 1D shows the keypad 100 in use as a charge status indicator. Each active region 102 corresponds to a charge level of 10%. Therefore the display currently indicates that there is 40% charge in the battery as the lower four active regions are illuminated, whilst the top six active regions remain unilluminated. The lowest active region shows a representation 106 of a battery.

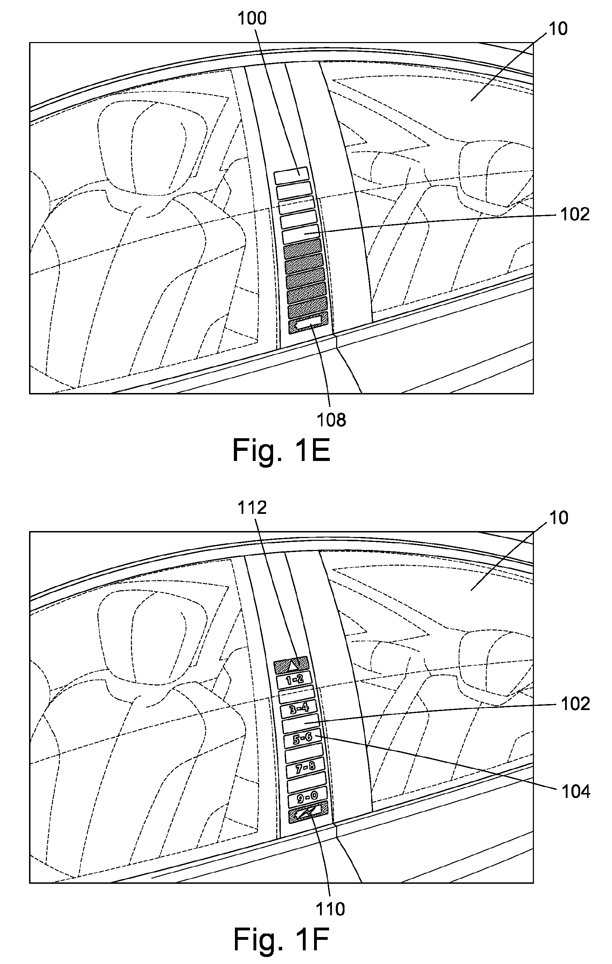

Figure 1E shows a keypad 100 in use as a charge status indicator when the vehicle is charging. The image shows a representation 108 of a battery being charged. The number of regions illuminated changes from 1 incrementally up to ten and then drops back to zero. This sequence continues whenever the keypad 100 is activated throughout the charging of the battery.
Figure 1F shows a keypad 100 providing an indication of a fault, together with the indicia 104 for use in vehicle entry. The fault indication comprises a battery icon 110 together with a warning triangle 112 in the uppermost active region 102. These are provided alongside the indicia 104 for use in vehicle entry.

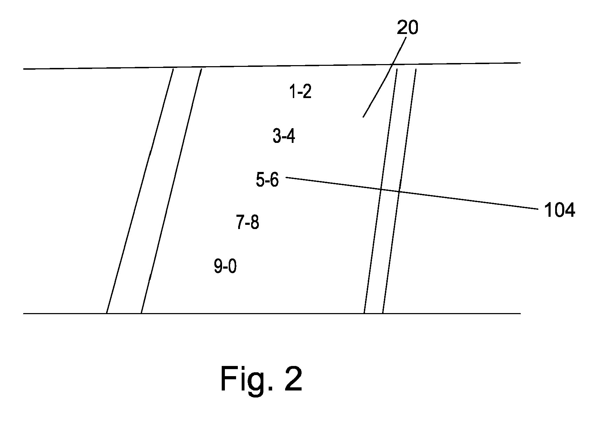

Figure 2 shows a further example of a keypad 100. This keypad 100 is provided on a B-pillar 20 of a vehicle 10. In this example the B-pillar is not vertical and therefore the indicia 104 are staggered with 1-2 being further right than 3-4 etc. However, it will be apparent that these indicia 104 are substantially vertical and the related active regions will still form a representation of the charge status of the battery, even though they are not exactly vertically aligned.

## Claims

1. A keypad is provided on an exterior of an electrical vehicle, the keypad is configured to receive an input to enable access to the vehicle and to provide an indication of the state of charge of the battery of the vehicle.

2. The keypad according to claim 1, wherein the keypad is provided on a window of the vehicle.

3. The keypad according to claim 2, wherein the keypad is also visible from the interior of the vehicle.

4. The keypad according to any one of claims 1 to 3, wherein the keypad has an access code entry region that comprises a plurality of indicia.

5. The keypad according to any one of claims 1 to 4, wherein the indication of the state of charge of the battery of the vehicle is provided using the access code entry region.

6. The keypad according to any one of claims 1 to 5, wherein each pair of indicia is surrounded by an active, substantially rectangular region.

7. The keypad according to claim 6, wherein the rectangular regions are arranged substantially vertically above one another.

8. The keypad according to claim 6 or claim 7, wherein all of the rectangular regions are configured to be illuminated if the battery is substantially fully charged.

9. The keypad according to any one of claims 6 to 8, wherein each rectangular region is configured to represent a predetermined percentage of battery charge so that the number of regions illuminated corresponds to the level of charge of the battery.

10. The keypad according to any one of claims 6 to 9, wherein there are five rectangular regions and each is configured to represent 20% charge.

11. The keypad according to any one of claims 1 to 10, wherein the indication of the state of charge of the battery of the vehicle is provided adjacent the access code entry region.

12. The keypad according to any one of claims 1 to 11, wherein the keypad is further configured to indicate that the battery is being charged.

13. The keypad according to claim 12, wherein the indication that the battery is being charged comprises a static image.

14. The keypad according to claim 12, wherein the indication that the battery is being charged comprises the rectangular regions being illuminated sequentially.
